(19) Europäisches Patentamt
European Patent Office
Office européen des brevets

(11) Veröffentlichungsnummer: **0 229 279 B1**

# (12) EUROPÄISCHE PATENTSCHRIFT

(45) Veröffentlichungstag der Patentschrift: **23.05.90**

(51) Int. Cl.⁵: **C09K 5/04**

(21) Anmeldenummer: **86116550.4**

(22) Anmeldetag: **28.11.86**

## (54) Stoffgemische für Absorptionswärmetransformatoren.

(30) Priorität: **06.12.85 DE 3543171**

(43) Veröffentlichungstag der Anmeldung: **22.07.87 Patentblatt 87/30**

(45) Bekanntmachung des Hinweises auf die Patenterteilung: **23.05.90 Patentblatt 90/21**

(84) Benannte Vertragsstaaten: **BE CH DE FR GB IT LI NL SE**

(56) Entgegenhaltungen:
**EP-A- 0 084 869**
**DE-A- 3 235 560**
**DE-A- 3 246 554**

**PATENT ABSTRACTS OF JAPAN, Band 9, Nr. 166 (C-290)[1889], 11. Juli 1985; & JP-A-60 40 187 (YAZAKI SOUGIYOU K.K.) 02-03-1985**

(73) Patentinhaber: **HOECHST AKTIENGESELLSCHAFT, Postfach 80 03 20, D-6230 Frankfurt am Main 80(DE)**

(72) Erfinder: **Stüven, Uwe, Martin-Wohmann-Strasse 27, D-6238 Hofheim am Taunus(DE)**
Erfinder: **Schmidt, Adolf, Dr., Hainerweg 23, D-6238 Hofheim am Taunus(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung betrifft Stoffgemische, die in einem Absorptions-Wärmetransformator zur Temperaturanhebung von Wärmeströmen auf mittlerem Temperaturniveau eingesetzt werden kann.

Der Grundgedanke, Wärme von mittlerem Temperaturniveau ohne Zufuhr nennenswerter Mengen Exergie auf ein höheres und damit wieder nutzbares Temperaturniveau zu transformieren, ist bereits seit langem bekannt. Der Wärmetransformator kann bevorzugt dort eingesetzt werden, wo ein Wärmestrom mittleren Temperaturniveaus mit ausreichend hohem Exergieanteil zur Verfügung steht und eine Kompressionswärmepumpe oder eine Absorptionswärmepumpe an ihre technischen oder wirtschaftlichen Grenzen gelangt. Dies trifft in der Regel dann zu, wenn eine große Temperaturanhebung im Bereich höherer Temperaturen gefordert wird oder wenn die Art und Zusammensetzung des Abwärmeträgers z.B. den Einsatz von Brüdenkompressoren nicht erlaubt. Der Sorptions-Wäremtransformator benötigt gegenüber der Sorptions- bzw. der Kompressionswärmepumpe erheblich weniger Primäreneergie, da die zur Temperaturanhebung notwendige Exergie direkt dem zu transformierenden Wärmestrom entzogen wird. Typisch sind etwa 2 bis 5 % Zusatzenergie bezogen auf den Nutzwärmestrom. Da kaum mechanisch angetriebene Teile vorhanden sind, zeichnet sich der Absorptions-Wärmetransformator daneben durch geringen Wartungsbedarf, Geräuscharmut, anspruchslose Aufstellung im Freien und geringen Verschleiß aus.

Einige Stoffpaare für Absorptions-Wärmetransformatoren sind bereits bekannt. Sie stammen im i.A. aus dem Bereich der Sorptionswärmepumpen und bestehen aus einem Lösemittel und einem flüchtigen zu lösenden Stoff (Wasser/Ammoniak, Lithiumbromid/Wasser). Ammoniak weist bei den infrage kommenden Temperaturen Siededrücke zwischen 50 und 100 bar auf, so daß aus sicherheitstechnischen, wirtschaftlichen und auch toxikologischen Gründen der Einsatz eingeschränkt und problematisch ist. Das Stoffpaar Lithiumbromid/Wasser erfordert hohes Vakuum, was zu großdimensionierten Apparaten mit hohen Dichtheitsanforderungen führt. Außerdem können Kristallisations- und Korrosionsprobleme auftreten.

Daneben sind noch die Stoffpaare Schwefelsäure/Wasser und Tetraethylenglycoldimethylether/Trifluorethanol für den Einsatz in Sorptions-Wärmetransformatoren geeignet. Beim Stoffpaar Schwefelsäure/Wasser ist wiederum hohes Vakuum erforderlich, was zu entsprechend großdimensionierten Apparaten führt. Außerdem könne Korrosionsprobleme auftreten.

Als günstiges Stoffpaar für den Betrieb eines Wärmetransormators wurde bisher das flüssige Arbeitsmittel Trifluorethanol mit dem Lösungsmittel Tetraethylenglycoldimethylether angesehen.

Der Erfindung liegt demnach die Aufgabe zugrunde, Arbeitsstoffgemische zu schaffen, die in einem technisch besseren Druckbereich (Vakuum bei Desorption und Kondensation zwischen 10 und 250 mbar, Druck bei Verdampfung und Absorption maximal 10 bar) pro kg Lösung mehr Wärme transportieren können als das zur Zeit insgesamt am günstigsten beurteilte Stoffpaar Trifluorethanol/Tetraethylenglycoldimethylether (TEGDME). Weitere Anforderungen, beispielsweise geringe Korrosivität, geringe Toxizität, thermische Stabilität sowie Verfügbarkeit ausreichender Mengen für technische Anlagen sollen ebenfalls erfüllt werden.

Es wurde nun gefunden, daß Stoffgemische, bestehend aus mindestens einem niederen aliphatischen Alkohol mit 1 bis 4 C-Atomen und oder Wasser und aus mindestens einer Verbindung der allgemeinen Formel $CH_3O(CH_2CH_2O)_nCH_3$, wobei n = 2, 3, 4, 5 , 6, 7, 8 oder 9 ist, diese Anforderungen erfüllen.

Messungen der Dampf/Flüssigkeits-Gleichgewichte des Stoffpaares Methanol/ $CH_3O(CH_2CH_2O)_4CH_3$ ergaben zum Beispiel, daß je nach Betriebsbedingungen bis zu 25 % mehr Wärme pro kg Lösung zu transportieren ist als bei dem Stoffpaar Trifluorethanol/TEGDME.

Die gemessenen Aktivitätskoeffizienten von Methanol in verschiedenen Lösungsmitteln zeigen, daß das Löseverhalten mit steigendem n sogar noch besser wird, da die Abweichung vom Wert 1 für den Aktivitätskoeffizienten steigt.

Tabelle 1

| Gemessene Aktivitätskoeffizienten von Methanol gelöst in verschiedenen Lösemitteln bei 70°C und 3,0 Mol.-% | |
|---|---|
| Lösemittel $CH_3–O–(CH_2CH_2–O)_n–CH_3$ | Aktivitätskoeffizient |
| Tetraethylenglykoldimethylether (TEGDME) n = 4 | 0,55 |
| Pentaethylenglykoldimethylether n = 5 | 0,48 |
| Polyethylenglykoldimethylether Gemisch mit n = 1–9 | 0,39 |
| Polyethylenglykoldi- und mono-methylether-Gemisch (80/20) n = 1–9 | 0,40 |

Der Vergleich gemessener Aktivitätskoeffizienten verschiedener aliphatischer Alkohole mit 1 bis 4 C-Atomen im Lösemittel TEGDME weist für Metanol das beste Löseverhalten aus, zeigt aber auch für die etwas höheren aliphatischen Alkohole noch gute Werte.

Tablelle 2

| Gemessene Aktivitätskoeffizienten von Alkoholen gelöst in Tetraethylenglykoldimethylether bei 70°C und 3,0 Mol.-% | |
|---|---|
| Alkohol | Aktivitätskoeffizient |
| Methanol | 0,55 |
| Ethanol | 0,83 |
| iso-Propanol | 0,69 |
| n-Butanol | 0,69 |

Die vielfältigen Kombinationsmöglichkeiten des Arbeitsstoffgemisches erlauben die Anpassung an die Temperaturverhältnisse des Wärmetransformationsprozesses. So werden mit steigender Abwärmetemperatur bevorzugt die etwas höheren aliphatischen Alkohole eingesetzt. Die Auswahl des Lösemittels bzw. des Lösemittelgemischs erfolgt ebenfalls in Abhängigkeit von den Temperaturen. Unter sicherheitstechnischen Gesichtspunkten sind Kombinationen mit Schwerpunkt bei n = 5 bis 6 zu bevorzugen, da diese in ausreichender Menge zur Verfügung stehen und Zündtemperaturen deutlich oberhalb von 200 °C (entsprechend Temperaturklasse T3) aufweisen, während reine Lösemittel mit n<5 in der Zündtemperatur unter 200 °C (entsprechend Temperaturklasse T4) liegen.

Die Toxizität der aliphatischen Alkohole mit 1 bis 4 C-Atomen sowie der Lösemittel ist weitgehend untersucht und sicherheitstechnisch gut beherrschbar. Die Stoffe stehen in ausreichenden Mengen zur Verfügung und zeichnen sich durch weitgehende thermische Stabilität aus, wie Versuche mit dem Stoffgemisch Methanol/Polyethylenglycoldimethylether (n = 2 bis 9, Hauptanteil n = 5 und 6) beispielhaft gezeigt haben.

Die Erfindung wird im folgenden anhand der Figur näher erläutert:

Die Figur zeigt stark vereinfacht einen Absorptions-Wärmetransformator-Prozeß. Der Wärmefluß in das System und aus dem System wird mit Q bezeichnet und durch Pfeilrichtung angegeben. Im Verdampfer (3) wird durch Wärmeaufnahme das Arbeitsmittel bei 60 °C bis 140 °C, vorzugsweise bei 65 °C - 100 °C und einem Druck zwischen 0,1 und 10 bar, vorzugsweise zwischen 1 und 6 bar verdampft. Der Arbeitsmitteldampf gelangt über Leitung (12) in den Absorber (4) und löst sich dort im Lösemittel bei Temperaturen zwischen 90 °C und 180 °C, vorzugsweise zwischen 100 °C und 150 °C und einem Druck zwischen 0,1 und 10 bar, vorzugsweise zwischen 1 und 6 bar. Dabei wird Wärme frei, die z.B. zur Erzeugung von Wasserdampf benutzt werden kann. Das mit Arbeitsmittel angereicherte Lösemittel (reiche Lösung) gelangt über Leitung (8) und Expansionsventil (7) in den Austreiber (1). Das Austreiben von Arbeitsmittel aus der Lösung erfolgt zwischen 60 °C und 140 °C, vorzugsweise zwischen 60 °C und 100 °C und bei einem Druck von 10 bis 250 mbar.

Das desorbierte Arbeitsmittel gelangt über Leitung (10) in den Kondensator (2). Im Kondensator (2) wird der Arbeitsmitteldampf bei Temperaturen zwischen 0 °C und 30 °C, vorzugsweise bei Umgebungstemperatur (z.B. 25 °C) und einem Druck von 10 bis 250 mbar verflüssigt. Die dabei frei werdende Kondensationswärme geht verloren und bildet den Antrieb des Sorptions-Wärmetransformators.

Vom Kondensator (2) wird das flüssige Arbeitsmittel mit Pumpe (5) über Leitung (11) in den Verdampfer (3) gepumpt.

Die im Austreiber (1) durch Desorption von Arbeitsmittel an Arbeitsmittel verarmte Lösung (arme Lösung) wird mit Pumpe (6) über Leitung (9) zurück in den Absorber (4) gepumpt und kann dort wieder Arbeitsmitteldampf aus dem Verdampfer (3) lösen.

Der Wärmetransformator-Kreisprozeß erfolgt zwischen zwei Druckniveaus. Der Druck der Niederdruckseite (nach Expansionsventil, Austreiber bis Pumpe arme Lösung, Kondensator bis Arbeitsmittelpumpe) resultiert aus dem Sättigungsdampfdruck des Arbeitsmittels bei der Kondensationstemperatur. Der Druck der Hochdruckseite (ab Austritt Pumpe arme Lösung, Austritt Arbeitsmittelpumpe, Verdampfer, Absorber bis Expansionsventil) resultiert aus dem Sättigungsdampfdruck des Arbeitsmittels bei der Verdampfungstemperatur.

Die Güte eines für den Sorptions-Wärmetransformator geeigenten Stoffpaares läßt sich anhand mehrerer Eigenschaften beurteilen. Je größer das Produkt aus Verdampfungswärme des Arbeitsmittels und Entgasungsbreite, d.h. der Differenz aus den Löslichkeiten des Arbeitsmittels im Absorber und im Austreiber, ist, um so mehr Wärme kann pro kg Lösung transportiert werden. Es kann vorteilhaft sein, daß die Dampfdruckkurven von Arbeitsmittel und Lösemittel so verlaufen, daß der Anlagedruck in der Nähe des Umgebungsdrucks liegt und außerdem eine einfache Austreibung ohne aufwendige Rektifikation möglich ist.

Am Beispiel des Stoffpaars Methanol/TEGDME veranschaulicht die Lage der Mittelpunkte der schematisch dargestellten Anlageteile 1 (Austreiber), 2 (Kondensator), 3 (Verdampfer) und 4 (Absorber) bezüglich des gezeichneten Koordinatensystems der Figur bevorzugte Arbeitsbedingungen hinsichtlich Druck- und Temperaturniveau für den Wärmetransformator. Für verschiedene Arbeitsbedingungen sind pro kg Lösung folgende Wärmemengen zu transportieren:

| 1. Temperatur Verdampfer/Austreiber 70°C | | |
|---|---|---|
| Temperatur Absorber | TFE/TEGDME | MeOH/TEGDME |
| 100°C | 62,1 kJ/kg | 68,3 kJ/kg |
| 110°C | 26,7 kJ/kg | 29,3 kJ/kg |
| **2. Temperatur Verdampfer/Austreiber 80°C** | | |
| Temperatur Absorber | TFE/TEGDME | MeOH/TEGDME |
| 110°C | 86,3 kJ/kg | 107,6 kJ/kg |
| 120°C | 51,2 kJ/kg | 52,2 kJ/kg |
| 130°C | 24,3 kJ/kg | 29,4 kJ/kg |
| **3. Temperatur Verdampfer/Austreiber 100°C** | | |
| Temperatur Absorber | TFE/TEGDME | MeOH/TEGDME |
| 130°C | 110,9 kJ/kg | 131,3 kJ/kg |
| 150°C | 52,8 kJ/kg | 46,8 kJ/kg |
| 170°C | 24,8 kJ/kg | 18,5 kJ/kg |

TFE = Trifluorethanol
MeOH = Methanol
TEGDME = Tetraethylenglycoldimethylether

Je niedriger die Temperatur im Absorber ist, umso höher ist die Beladung des TEGDME mit Methanol. Je höher die Temperatur im Austreiber ist, umso geringer ist die Restbeladung. Das Mischungsverhältnis TEGDME/Methanol hängt als von den Arbeitsbedingungen ab. In den meisten Fällen beträgt der Gewichtsanteil Methanol 1-30 %, vorzugsweise 3-15 % am Gesamtgemisch. Die Entgasungsbreite liegt im angegebenen Temperatur- und Druckbereich zwischen 3,5 und 15 %.

## Patentansprüche

1. Stoffgemisch zur Verwendung in Absorptions-Wärmetransformatoren, dadurch gekennzeichnet, daß es aus
a) mindestens einem niederen aliphatischen Alkohol mit 1 bis 4 C-Atomen und
b) aus mindestens einer Verbindung der allgemeinen Formel
$CH_3O(CH_2CH_2O)_nCH_3$ besteht,
wobei n = 2, 3, 4, 5, 6, 7, 8 oder 9 ist.

2. Stoffgemisch gemäß Anspruch 1, dadurch gekennzeichnet, daß es aus Methanol und $CH_3O(CH_2CH_2O)_4CH_3$ (Tetraethylenglycoldimethylether TEGDME) besteht.

3. Stoffgemisch gemäß Anspruch 1, dadurch gekennzeichnet, daß es aus Methanol und einem Gemisch der Verbindung $CH_3O(CH_2CH_2O)_nCH_3$ mit n = 2 bis 9 besteht, wobei der Hauptanteil bei n = 5 und 6 liegt.

4. Stoffgemisch gemäß Anspruch 1, dadurch gekennzeichnet, daß der aliphatische Alkohol ausgewählt ist aus der Gruppe bestehend aus Ethanol, Propanol, 2-Propanol, n-Butanol, t-Butanol, Iso-Butanol, Sek.-Butanol.

5. Stoffgemisch gemäß Anspruch 1, dadurch gekennzeichnet, daß es aus einem niederen aliphatischen Alkohol und/oder Wasser und einem Gemisch der Verbindung $CH_3O(CH_2CH_2O)_nCH_3$ mit n = 2 bis 9 besteht, wobei der Hauptanteil bei n = 5 und 6 liegt.

6. Verwendung eines Stoffgemisches bestehend aus
a) mindestens einem niederen aliphatischen Alkohol mit 1 bis 4 C-Atomen und/oder Wasser und
b) aus mindestens einer Verbindung der allgemeinen Formel
$CH_3O(CH_2CH_2O)_nCH_3$,
wobei n = 2, 3, 4, 5, 6, 7, 8 oder 9 ist in einem Absorptions-Wärmetransformator.

7. Verfahren zum Anheben der Temperatur einer Abwärmequelle auf ein höheres Niveau mittels Wärmetransformator mit einem Arbeitsstoffgemisch gemäß Anspruch 6 bestehend aus Arbeitsmittel und Lösemittel, dadurch gekennzeichnet, daß man das Arbeitsmittel des Stoffgemischs mittels Abwärme von 60 °C bis 140°C bei Drücken von 0,1 bis 10 bar verdampft und den Dampf in einer flüssigen Phase aus Lösemittel und wenig Arbeitsmittel absorbiert, die Absorptionswärme abführt, das mit Arbeitsmittel angereicherte Lösemittel expandiert, das Arbeitsmittel bei Temperaturen von 60 bis 140°C und Drücken von 10 bis 250 mbar austreibt und bei Temperaturen von 0 bis 30°C verflüssigt, die Kondensationswärme abführt, das flüssige Arbeitsmittel unter Druckerhöhung auf 0,1 bis 10 bar der Verdampfung und das Lösemittel mit wenig Arbeitsmittel unter Druckerhöhung auf 0,1 bis 10 bar der Absorption wieder zuführt.

8. Verfahren gemäß Anspruch 7, dadurch gekennzeichnet, daß man das Stoffgemisch gemäß Anspruch 2 einsetzt.

9. Verfahren gemäß Anspruch 7, dadurch gekennzeichnet, daß man das Stoffgemisch gemäß Anspruch 3 einsetzt.

10. Verfahren gemäß Anspruch 7, dadurch gekennzeichnet, daß bei Nutzung eines flüssigen Abwärmeträgers die Beheizung von Verdampfer und Austreiber sowohl in Parallelschaltung als auch in Reihenschaltung erfolgen kann.

**Claims**

1. A mixture of materials for application in absorption heat transformers, which consists of
a) at least one lower aliphatic alcohol having 1 to 4 C atoms and
b) of at least one compound of the general formula
$CH_3O(CH_2CH_2O)_nCH_3$
where n = 2, 3, 4, 5, 6, 7, 8 or 9.

2. The mixture of materials as claimed in claim 1, which consists of methanol and $CH_3O(CH_2CH_2O)_4CH_3$ (tetraethylene glycol dimethyl ether TEGDME.

3. The mixture of materials as claimed in claim 1, which consists of methanol and a mixture of the compound $CH_3O(CH_2CH_2O)_nCH_3$ with n = 2 to 9, the main component having n = 5 and 6.

4. The mixture of materials as claimed in claim 1, wherein the aliphatic alcohol is selected from the group consisting of ethanol, propanol, 2-propanol, n-butanol, t-butanol, iso-butanol and sec-butanol.

5. The mixture of materials as claimed in claim 1, which consists of a lower aliphatic alcohol and/or water and a mixture of the compound $CH_3O(CH_2CH_2O)_nCH_3$ with n = 2 to 9, the main component having n = 5 and 6.

6. Application of a mixture of materials consisting of
a) at least one lower aliphatic alcohol having 1 to 4 C atoms and/or water and
b) of at least one compound of the general formula
$CH_3O(CH_2CH_2O)_nCH_3$ where n = 2, 3, 4, 5, 6, 7, 8 or 9 in an absorption heat transformer.

7. A process for raising the temperature of a waste heat source to a higher level by means of a heat transformer with a mixture of working materials as claimed in claim 6, consisting of working medium and solvent, wherein the working medium of the mixture of materials is evaporated by means of waste heat from 60°C to 140°C at pressures of 0.1 to 10 bar, and the vapour is absorbed in a liquid phase consisting of solvent and a small quantity of working medium, the heat of absorption is removed, the solvent enriched with working medium is expanded, the working medium is expelled at temperatures of 60 to 140°C and pressures of 10 to 250 mbar and condensed at temperatures of 0 to 30°C, the heat of condensation is removed, and the liquid working medium is recycled with a pressure increase to 0.1 to 10 bar to the evaporation and the solvent together with a small quantity of working medium with a pressure increase to 0.1 to 10 bar to the absorption.

8. The process as claimed in claim 7, wherein the mixture of materials as claimed in claim 2 is used.

9. The process as claimed in claim 7, wherein the mixture of materials as claimed in claim 3 is used.

10. The process as claimed in claim 7, wherein the heating of evaporator and expeller can take place both in parallel circuit and also in series circuit, where a liquid waste heat transport medium is used.

**Revendications**

1. Mélange de matières à utiliser dans des transformateurs de chaleur à absorption, mélange caractérisé en ce qu'il consiste en

a) au moins un alcool aliphatique inférieur comportant 1 à 4 atomes de carbone, et

b) en au moins un composé de formule générale

$CH_3O\ (CH_2CH_2O)_nCH_3$,

dans laquelle n vaut 2, 3, 4, 5, 6, 7, 8 ou 9.

2. Mélange de matières selon la revendication 1, caractérisé en ce qu'il consiste en du méthanol et en $CH_3O(CH_2CH_2O)_4CH_3$ (éther-oxyde diméthylique de tétraéthylène-glycol, TEGDME).

3. Mélange de matières selon la revendication 1, caractérisé en ce qu'il consiste en du méthanol et en mélange des composés $CH_3O\ (CH_2CH_2O)_nCH_3$ pour lesquels n vaut 2 à 9, la fraction principale se situant à n = 5 et 6.

4. Mélange des matières selon la revendication 1, caractérisé en ce que l'alcool aliphatique est choisi dans l'ensemble constitué par l'éthanol, le propanol, le propanol-2, le butanol, le tertio-butanol, l'isobutanol, le butanol secondaire.

5. Mélange de matières selon la revendication 1, caractérisé en ce qu'il consiste en un alcool aliphatique inférieur et/ou de l'eau et en un mélange des composés de formule $CH_3O(CH_2CH_2O)_nCH_3$ dans laquelle n vaut 2 à 9, la fraction principale se situant à n = 5 et 6.

6. Utilisation d'un mélange de matières consistant en

a) au moins un alcool aliphatique inférieur comportant 1 à 4 atomes de carbone et/ou de l'eau, et

b) en au moins un composé de formule générale

$CH_3O(CH_2CH_2O)_nCH_3$

dans laquelle n vaut 2, 3, 4, 5, 6, 7, 8 ou 9, dans un transformateur de chaleur à absorption.

7. Procédé pour élever à un niveau supérieur la température d'une source de chaleurs perdues, à l'aide d'un transformateur de chaleur fonctionnant avec un mélange de matières de travail, selon la revendication 6, ce mélange consistant en un milieu de travail et du solvant, procédé caractérisé en ce qu'on évapore le milieu de travail faisant partie du mélange des matières, à l'aide de chaleurs perdues dont la température va de 60°C à 140°C sous des pressions de 0,1 à 10 bars et l'on absorbe la vapeur dans une phase liquide formée d'un solvant et d'un peu de milieu de travail, on provoque le dégagement de la chaleur de l'absorption, la détente du solvant enrichi en le milieu de travail, la désorption du milieu de travail à des températures de 60 à 140°C et sous des pressions de 10 à 150 mbars et une liquéfaction des températures de 0 à 30°C, on provoque le dégagement de la chaleur de condensation, on recycle le milieu liquide de travail, avec élévation de la pression à 0,1 jusqu'à 10 bars vers l'évaporation et l'on recycle le solvant avec un peu de milieu de travail, sous une élévation de pression à 0, 1 jusqu'à 10 bars vers l'absorption.

8. Procédé selon la revendication 7, caractérisé en ce qu'on utilise le mélange des matières selon la revendication 2.

9. Procédé selon la revendication 7, caractérisé en ce qu'on utilise le mélange des matières selon la revendication 3.

10. Procédé selon la revendication 7, caractérisé en ce qu'en cas d'utilisation d'un véhicule liquide porteur des chaleurs perdues (caloporteur), le chauffage de l'évaporateur et du désorbeur peut avoir lieu avec un dispositif monté en parallèle aussi bien qu'avec un dispositif monté en série.

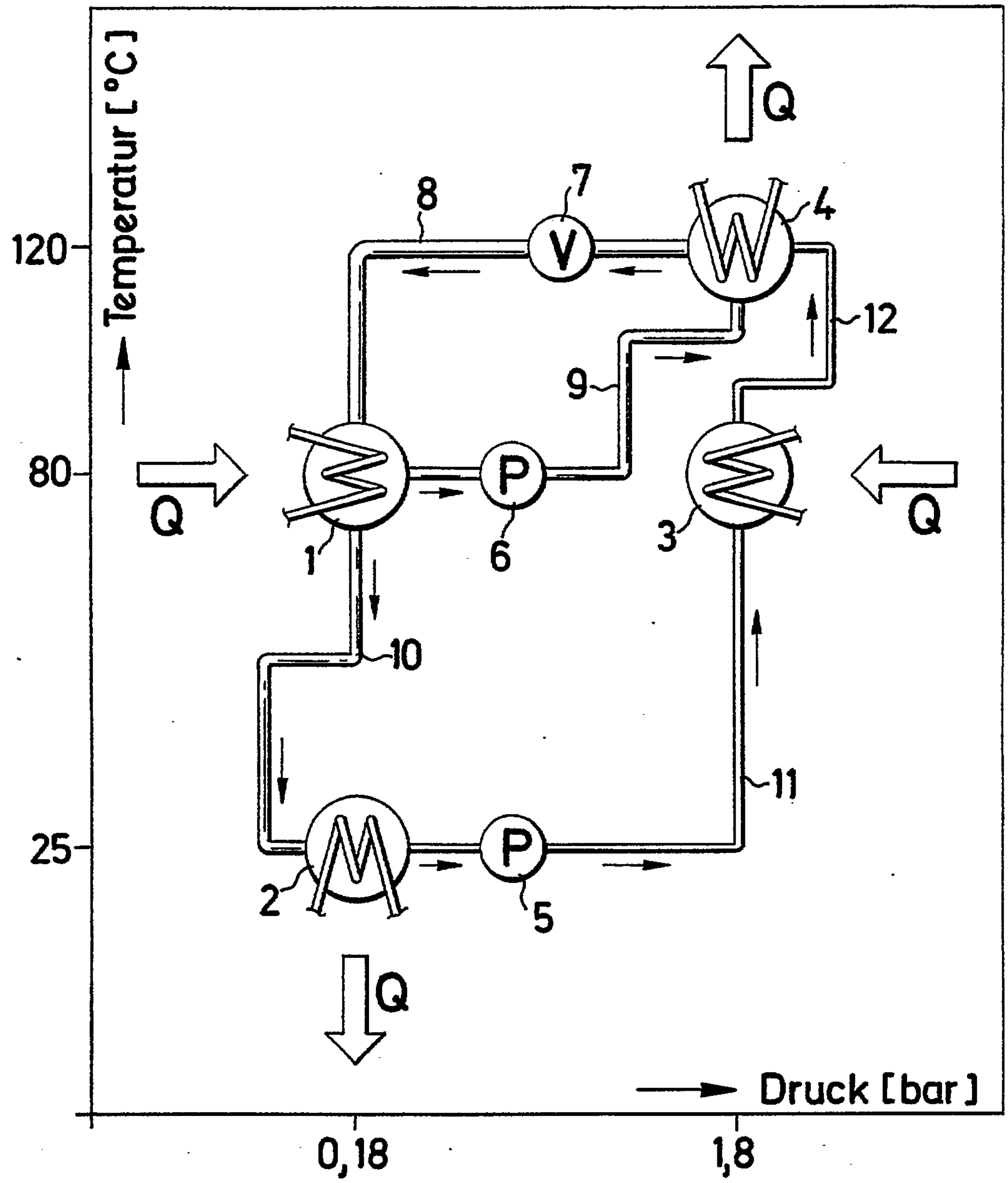
Temperatur [°C]
120
80
25
Q
Q
Q
Q
8
7
V
4
W
12
9
P
6
1
3
10
11
M
P
2
5
Druck [bar]
0,18
1,8